# EUROPEAN PATENT APPLICATION

(11) **EP 4 187 439 A1**
(43) Date of publication of application: **31.05.2023**
(21) Application number: 21847428.6
(22) Date of filing: 14.07.2021
(51) Int. Cl.: G06K 9/62

(54) **METHOD FOR TRAINING COMMUNICATION DECISION MODEL, ELECTRONIC DEVICE AND COMPUTER READABLE MEDIUM**

(30) Priority: 21.07.2020 CN 202010705787
(71) Applicant: ZTE Corporation, Shenzhen, Guangdong 518057 (CN)
(72) Inventor: DONG, Jia, Shenzhen, Guangdong 518057 (CN); NI, Hua, Shenzhen, Guangdong 518057 (CN); KANG, Honghui, Shenzhen, Guangdong 518057 (CN)
(74) Representative: Ipsilon
(86) International application number: PCT/CN2021/106219
(87) International publication number: WO 2022/017231

(57) **Abstract**

Provided is a method for training a communication decision model, including: training (S101) an initial model according to first decision samples to adjust model parameters of the initial model, so as to obtain a first trained model, with the first decision samples being samples of decisions already made by a first communication site; acquiring (S102) at least one modification value of second model parameter of at least one second trained model, with each second trained model being obtained by training the initial model according to second decision samples of one second communication site, the second decision samples being samples of decisions already made by the second communication site, and each modification value of second model parameter representing at least part of modifications to model parameters of the second trained model relative to the model parameters of the initial model; and (S103) adjusting model parameters of the first trained model according to at least part of modification values of second model parameters to obtain a communication decision model for the first communication site.

## Description

### CROSS-REFERENCE TO RELATED APPLICATIONS

The present disclosure claims the priority to the Chinese Patent Application No. 202010705787.7 filed with the CNIPA on July 21, 2020, the entire contents of which are incorporated herein by reference.

### TECHNICAL FIELD

The present disclosure relates to, but is not limited to, the technical field of communications.

### BACKGROUND

There are a large number of communication sites in a communication network, and the communication sites often need to make decisions, such as trends of service processes, and policies for users.

Fixed logic decisions set manually cannot adapt to different situations at different communication sites, and the parameters set are relatively accurate after long-time manual statistical analysis.

Decision models using a machine learning method are hard to converge and need massive transmission resources, and a difference in the numbers of samples of the different communication sites can easily cause a poor decision effect of the communication site having fewer samples.

### SUMMARY

In the first aspect, the present disclosure provides a method for training a communication decision model used by a communication site to make decisions, including: training an initial model according to first decision samples to adjust model parameters of the initial model, so as to obtain a first trained model; wherein the first decision samples are samples of decisions already made by a first communication site; acquiring at least one modification value of second model parameter of at least one second trained model; wherein each of the at least one second trained model is obtained by training the initial model according to second decision samples of a respective one second communication site, and the second decision samples are samples of decisions already made by the respective one second communication site; and each modification value of second model parameter represents at least part of modifications to model parameters of the second trained model relative to the model parameters of the initial model; and adjusting model parameters of the first trained model according to at least part of modification values of second model parameters to obtain a communication decision model for the first communication site.

In the second aspect, the present disclosure further provides an electronic device, including: one or more processors; a memory having stored thereon one or more programs, which, when executed by the one or more processors, cause the one or more processors to carry out the method for training a communication decision model described herein; and one or more I/O interfaces connected between the one or more processors and the memory and configured to enable information interaction between the one or more processors and the memory.

In the third aspect, the present disclosure further provides a computer-readable medium having a computer program stored thereon. When the program is executed by a processor, the method for training a communication decision model described herein is carried out.

### BRIEF DESCRIPTION OF DRAWINGS

FIG. 1 is a flowchart illustrating a method for training a communication decision model according to the present disclosure;
FIG. 2 is a flowchart of some operations in the method for training a communication decision model according to the present disclosure;
FIG. 3 is a flowchart illustrating the method for training a communication decision model according to the present disclosure;
FIG. 4 is a flowchart of some operations in the method for training a communication decision model according to the present disclosure;
FIG. 5 is a flowchart illustrating the method for training a communication decision model according to the present disclosure;
FIG. 6 is a block diagram of an electronic device according to the present disclosure; and
FIG. 7 is a block diagram of a computer-readable medium provided by the present disclosure.

### DETAIL DESCRIPTION OF EMBODIMENTS

In order to enable those of ordinary skill in the art to better understand the technical solutions of the present disclosure, the method for training a communication decision model, the electronic device, and the computer-readable medium provided by the present disclosure are described in detail below with reference to the drawings.

The implementations of the present disclosure will be described more fully below with reference to the drawings, but the implementations illustrated herein may be embodied in different forms, and should not be interpreted as being limited to the implementations described herein. Rather, the implementations are provided to make the present disclosure thorough and complete, and are intended to enable those of ordinary skill in the art to fully understand the scope of the present disclosure.

The drawings of the present disclosure are intended to provide a further understanding of the implementations of the present disclosure and constitute a part of the specification. Together with the implementations of the present disclosure, the drawings are used to explain the present disclosure, but do not constitute any limitation to the present disclosure. The above and other features and advantages will become more apparent to those of ordinary skill in the art from the description of exemplary implementations with reference to the drawings.

The implementations of the present disclosure can be described with reference to plans and/or cross-sectional views with the aid of idealized schematic diagrams of the present disclosure. Accordingly, the exemplary drawings may be modified according to manufacturing techniques and/or tolerances.

The implementations described herein and the features therein can be arbitrarily combined with one another if no conflict is incurred.

The terms used herein are merely used to describe specific implementations, and are not intended to limit the present disclosure. The term "and/or" used herein includes one associated listed item or any and all combinations of one or more of the associated listed items. As used herein, "a" and "the" which indicate a singular form are intended to include a plural form, unless expressly stated in the context. The terms "comprise" and "be made of" used herein indicate the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

The implementations of the present disclosure are not limited to those illustrated by the drawings, but include modifications to configuration formed based on a manufacturing process. Thus, the regions shown in the drawings are illustrative, and the shapes of the regions shown in the drawings illustrate specific shapes of the regions of the elements, but are not intended to make limitations.

There are a large number of communication sites (e.g., base stations, and specific communication devices) in a communication network, and the communication sites are configured to perform corresponding communication services. When the communication services are performed, some "decisions" (i.e., the decisions as to "how" to perform the communication services) may need to be made, for example, the decisions on the trends of the service processes or the decisions on the policies for the users are made.

In some existing technologies, the communication sites use the fixed logic to make decisions, and different communication sites use the same logic but may set different logic parameters. Dur to a large difference in the situations at the different communication sites, the same logic may fail to adapt to the specific situation at each communication site; and since the logic parameters are manually set, the relatively accurate logic parameters may be found after the long-time statistical analysis.

In some existing technologies, the communication sites may make the decisions with the machine learning method: sample data of already made decisions is collected from a plurality of communication sites, and is learnt with the machine learning method to form a corresponding machine learning model, and each communication site makes the decisions according to the obtained machine learning model.

Since the different communication sites may differ greatly from each other, a large difference may also exist between the sample data corresponding to the different communication sites. With an essence of the machine learning being learning the sample data, when the sample data corresponding to the different communication sites differs greatly in amount, the machine learning model may hardly learn the characteristics of the sample data which is small in amount, resulting in a poor decision effect of the communication site corresponding to the sample data which is small in amount.

Moreover, if it is desired to obtain, by training, a model which can enable "all" the communication sites to produce good decision effects, the obtained machine learning model may be relatively complex due to the large difference between the different communication sites, and hard to converge in a training process. Since the machine learning model which is relatively complex is inevitably larger than a simple machine learning model, transmission of such machine learning model needs more transmission resources.

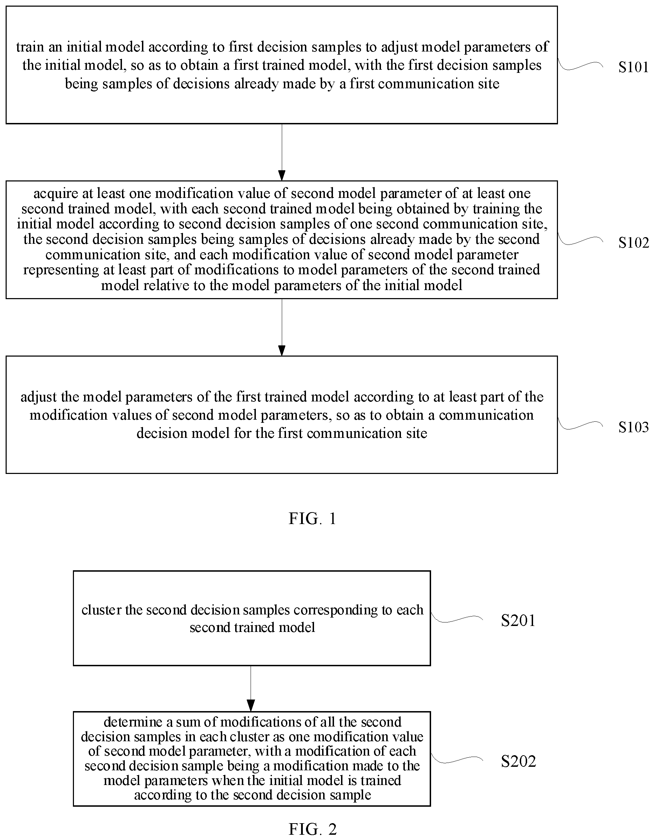

In the first aspect, with reference to FIG. 1, the present disclosure provides a method for training a communication decision model which is used by a plurality of communication sites in a communication network to make decisions.

Each communication site corresponds to a respective one service node, which is configured to process services of the communication site, such as making the decisions. A plurality of communication sites correspond to one central node, which is configured to process services among different communication sites, such as data exchange among the different communication sites.

Different service nodes may be different devices or may be located at different positions, for example, a service node is a corresponding communication site; or the different service nodes may be a same device or may be located at a same position, for example, the service nodes and the central node are the same server, that is, one server completes all processes of the method provided by the implementations of the present disclosure.

In other words, the operations of the method provided by the implementations of the present disclosure may be performed in different devices or in one device, and different data transmission processes may be needed in a case where different operations are performed in the different devices. The different data transmission processes are within the scope of the present disclosure as long as the different data transmission processes include substantial processes of all the operations of the method provided by the implementations of the present disclosure.

As shown in FIG. 1, in an implementation, the method of the present disclosure may include operations S101 to S103.

In operation S101, an initial model is trained according to first decision samples to adjust model parameters of the initial model, so as to obtain a first trained mode; and the first decision samples are samples of decisions already made by a first communication site.

The service node corresponding to the first communication site collects the first decision samples of the first communication site, and trains the initial model according to the first decision samples after a certain number of the first decision samples are collected, or adjusts the model parameters of the initial model according to the first decision samples to obtain the first trained model.

The first decision samples are the samples of the decisions already made by the first communication site, and may be, for example, characteristic information (or index information), the decisions already made, and effects of the decisions. The initial model is issued by the central node to each service node, and may be, for example, model structures and corresponding model parameters of a machine learning model (such as an artificial intelligence model) which has been pre-trained according to big data, and the initial models for the different communication sites are the same.

In operation S102, at least one modification value of second model parameter of at least one second trained model is acquired; each second trained model is obtained by training the initial model according to second decision samples of one second communication site, and the second decision samples are samples of decisions already made by the second communication site; and each modification value of second model parameter represents at least part of modifications to model parameters of the second trained model relative to the model parameters of the initial model.

The central node acquires at least one modification value of second model parameter of a second trained model of at least one second communication site, and sends the modification value of second model parameter to the service node corresponding to the first communication site. Apparently, if the central node and the service node are the same communication site or device, the subsequent processing is directly performed, and the operation of sending the modification value of second model parameter to the service node corresponding to the first communication site is not needed.

It should be understood that, in the implementations of the present disclosure, the second communication site is relative to the first communication site, that is, when a certain communication site serves as the first communication site to carry out the method provided by the implementations of the present disclosure, all the other communication sites are the second communication sites.

That is, the first communication site and the second communication sites are such defined relative to a training process of a communication decision model, rather than referring to a specific communication site or some specific communication sites, that is, the first communication site in one training process of the communication decision model may serve as the second communication site in a next training process of the communication decision model, and similarly, the second communication site in one training process of the communication decision model may serve as the first communication site in the next training process of the communication decision model.

Similar to the first communication site, the service node corresponding to the second communication site collects the second decision samples of the second communication site, and trains the initial model according to the second decision samples (i.e., the samples of the decisions already made by the second communication site), or adjusts the model parameters of the initial model according to the second decision samples, so as to obtain the second trained model (for the second communication site itself, if the second communication site also serves as the "first communication site", the obtained model is the "first trained model" of the second communication site).

An adjustment made to the model parameters of the initial model according to the second decision samples, i.e., a modification to the model parameters of the second trained model relative to the model parameters of the initial model, is a modification value of second model parameter. Each second trained model has at least one modification value of second model parameter, each modification value of second model parameter represents part of the modifications to the model parameters of the second trained model relative to the model parameters of the initial model, and all modification values of second model parameters represent all modifications to the model parameters of the second trained model relative to the model parameters of the initial model.

In operation S103, the model parameters of the first trained model are adjusted according to at least part of the modification values of second model parameters, so as to obtain a communication decision model for the first communication site.

The service node corresponding to the first communication site adjusts, according to at least part of the acquired modification values of second model parameters, the model parameters of the first trained model obtained by the training, and finally obtains the communication decision model used for communication decisions of the first communication site.

In the method for training a communication decision model provided by the implementation of the present disclosure, each communication site trains the model using the decision samples thereof, which avoids the problem that convergence is hard to perform when the decision samples of all the communication sites are used for training of a unified model, and the problem that the decision effect of the communication site with fewer decision samples is poor due to the large difference in the numbers of the decision samples of the different communication sites. Meanwhile, according to the implementation of the present disclosure, the first trained model of the first communication site is further modified according to the model modification values of the trained models of the other communication sites, so as to avoid the problem that the first trained model having fewer first decision samples falls into local optimal solution due to the fewer training samples.

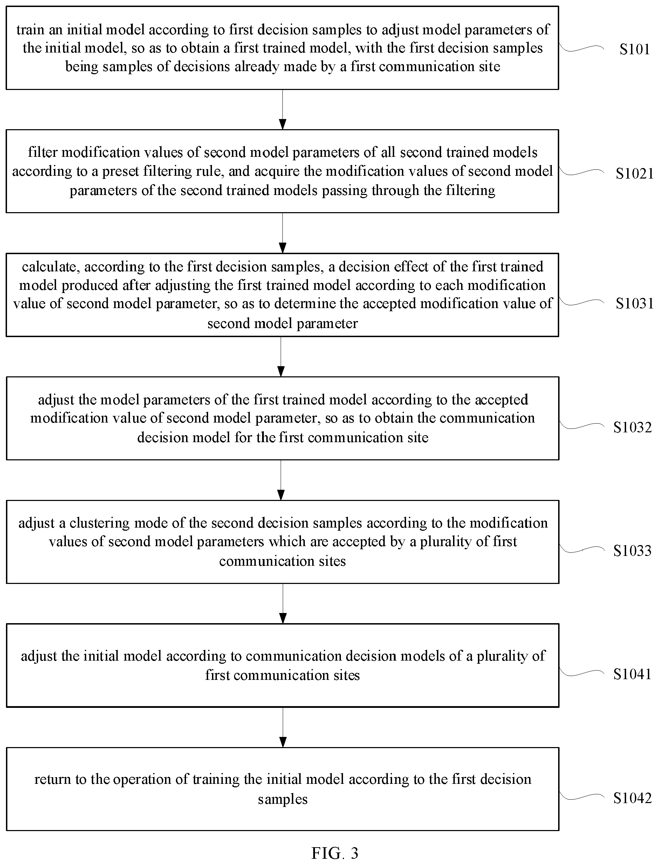

With reference to FIG. 3, in some implementations, acquiring the at least one modification value of second model parameter of the at least one second trained model (S102) includes: S1021, filtering modification values of second model parameters of all second trained models according to a preset filtering rule, and acquiring the modification values of second model parameters of the second trained models passing through the filtering.

After receiving the modification values of second model parameters sent by each service node, the central node filters the modification values of second model parameters according to a certain rule. For example, the central node filters the modification values of second model parameters according to acceptance conditions of the modification values of the second model parameters of the service node by the other service nodes (that is, whether the first trained models are modified according to the modification values of second model parameters of the service node) in a previous training process of the communication decision model.

An exemplary method of determining whether to filter the modification values of second model parameters may be clustering, or calculating an average distance between samples, or calculating an overlap ratio of calculation of a mean square error of distances between samples.

The number of the modification values of second model parameters can be reduced through the filtering, so that a waste of transmission resources can be reduced when the data needs to be transmitted in a case where the central node and the service nodes are not at the same position.

With reference to FIG. 2, in some implementations, the modification value of second model parameter of each second trained model may be obtained through operations S201 and S202 as follows.

In operation S201, the second decision samples corresponding to each second trained model are clustered.

The service node corresponding to the second communication site clusters the second decision samples of the second communication site used for training the initial model, and the second decision samples are divided by the clustering into several clusters each having similar characteristics.

A method and clustering parameters used for the clustering are not limited herein, and may be selected flexibly according to actual situations. For example, the second decision samples are uniformly clustered according to density based on the characteristic information of the second decision samples, or the second decision samples are clustered according to the number of clusters and an initial clustering point which are set according to the decision effects of the second decision samples.

In operation S202, a sum of modifications of all the second decision samples in each cluster is determined as one modification value of second model parameter, and a modification of each second decision sample is a modification made to the model parameters when the initial model is trained according to the second decision sample.

When the initial model is trained according to the second decision samples, a change of the model parameters after each second decision sample is input into the initial model is the modification of the second decision sample. One modification value of second model parameter is determined according to the modifications of all the second decision samples in one cluster, for example, the sum of the modifications of all the second decision samples in each cluster is one modification value of second model parameter, or an average of the modifications of all the second decision samples in each cluster is one modification value of second model parameter.

The service node corresponding to the second communication site determines a plurality of modification values of second model parameters according to the second decision samples in all the clusters, and sends the plurality of modification values of second model parameters to the service node corresponding to the first communication site through the central node.

With each cluster corresponding to one modification value of second model parameter, on the one hand, the number of the modification values of second model parameters can be reduced, that is, the calculation amount in the subsequent operations can be reduced. On the other hand, since the second decision samples in the same cluster have similar characteristics, the modifications made to the model parameters of the initial model according to those second decision samples are also similar, and the sum or average of the modifications of all the second decision samples can represent the modifications made to the model parameters of the initial model according to those decision samples. For the second decision samples which do not have similar characteristics, the modifications made to the model parameters of the initial model according to those second decision sample may vary greatly, so that the sum or average of the modifications cannot replace the actual modifications.

With reference to FIG. 3, in some implementations, the operation of adjusting the model parameters of the first trained model according to at least part of the modification values of second model parameters, so as to obtain the communication decision model for the first communication site (S103) includes operations S1031 and S1032.

In operation S1031, a decision effect of the first trained model produced after adjusting the first trained model according to each modification value of second model parameter is calculated according to the first decision samples, so as to determine the accepted modification value of second model parameter.

The service node corresponding to the first communication site verifies the acquired multiple modification values of second model parameters one by one to obtain the decision effects corresponding to the modification values of second model parameters. If a decision effect meets a certain condition, it is determined that the corresponding modification value of second model parameter is the accepted modification value of second model parameter; and if the decision effect does not meet the certain condition, the corresponding modification value of second model parameter is discarded.

That is, the first trained model is modified according to one modification value of second model parameter to obtain the adjusted first trained model, the characteristic information of the first decision samples is input into the adjusted first trained model to obtain decision results, and the obtained decision results are compared with the decisions of the first decision samples to obtain a decision effect of the adjusted first trained model. A method for the comparison is not limited herein, and different comparison methods, such as averaging, calculating confidence, and calculating key index based on statistics, may be used according to actual situations.

If the decision effect meets the certain condition (for example, if the decision effect is higher than a certain threshold), it is determined that the modification value of second model parameter is the accepted modification value of second model parameter. All the modification values of second model parameters are verified with the same method, so as to determine the accepted modification value of second model parameter.

In operation S1032, the model parameters of the first trained model are adjusted according to the accepted modification value of second model parameter, so as to obtain the communication decision model for the first communication site.

The service node corresponding to the first communication site adjusts the model parameters of the first trained model according to the accepted modification value of second model parameter, such as modifying the first trained model according to the accepted modification value of second model parameter, so as to obtain the communication decision model for the first communication site.

The modification value of second model parameter represents the modification made to the initial model according to the second decision samples, and the second decision samples may be different from the first decision samples, i.e., the samples of the first communication site. Therefore, not all the modification values of second model parameters are suitable for the first trained model of the first communication site. By screening the modification values of second model parameters according to the first decision samples, the modification value of second model parameter which is not suitable for the first trained model may be rejected, so that the obtained communication decision model is more suitable for the first communication site.

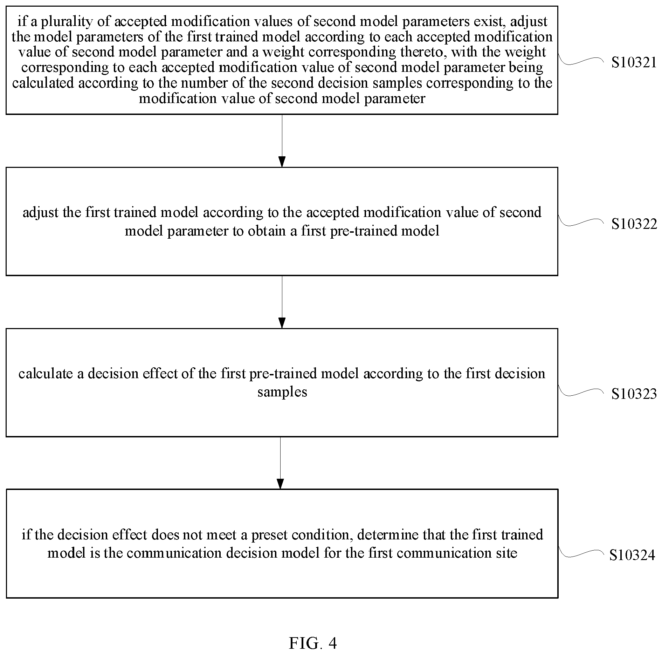

With reference to FIG. 4, in some implementations, adjusting the model parameters of the first trained model according to the accepted modification value of second model parameter, so as to obtain the communication decision model for the first communication site (S1032) includes: S10321, if a plurality of accepted modification values of second model parameters exist, adjusting the model parameters of the first trained model according to each accepted modification value of second model parameter and a weight corresponding thereto, with the weight corresponding to each accepted modification value of second model parameter being calculated according to the number of the second decision samples corresponding to the modification value of second model parameter.

If it is determined by the service node corresponding to the first communication site that the plurality of accepted modification values of second model parameters exist, the number of the second decision samples in the cluster corresponding to each modification value of second model parameter is calculated, a proportion of the number of the second decision samples corresponding to each of the plurality of modification values of second model parameters is calculated, and the first trained model is modified according to the modification values of second model parameters by taking the proportions as the weights, so as to obtain the communication decision model for the first communication site.

If three accepted modification values of second model parameters exist, and the numbers of the second decision samples corresponding thereto are in a proportion of 3:4:3, the first trained model is modified according to 30% of the first modification value of second model parameter, 40% of the second modification value of second model parameter, and 30% of the third modification value of second model parameter, so as to obtain the communication decision model for the first communication site.

In a case where abnormal samples exist, by modifying the model parameters of the first trained model according to the proportions of the numbers of the samples, the modification made to the model according to the abnormal samples is smaller because the abnormal samples are fewer, which prevents the abnormal samples from influencing the model too much and finally influencing the decision effect of the model.

With reference to FIG. 4, in some implementations, adjusting the model parameters of the first trained model according to the accepted modification value of second model parameter, so as to obtain the communication decision model for the first communication site (S1032) includes operations S10322 to S10324.

In operation S10322, the first trained model is adjusted according to the accepted modification value of second model parameter to obtain a first pre-trained model.

The service node corresponding to the first communication site adjusts the model parameters of the first trained model according to the accepted modification value of second model parameter, such as modifying the first trained model according to the accepted modification value of second model parameter, so as to obtain the first pre-trained model.

In operation S10323, a decision effect of the first pre-trained model is calculated according to the first decision samples.

The service node corresponding to the first communication site inputs the characteristic information of the first decision samples into the first pre-trained model to obtain decision results, and the obtained decision results are compared with the decisions of the first decision sample, so as to obtain the decision effect of the first pre-trained model.

A method for the comparison is not limited herein, and different comparison methods, such as averaging, calculating confidence, and calculating key index based on statistics, may be used according to actual situations.

In operation S10324, if the decision effect does not meet a preset condition, it is determined that the first trained model is the communication decision model for the first communication site.

If the decision effect does not meet the preset condition (for example, if the decision effect is lower than a preset threshold), the accepted modification value of second model parameter is discarded, that is, the model parameters of the first trained model are not adjusted according to the accepted modification value of second model parameter, and the first trained model is taken as the communication decision model for the first communication site.

Or, a ratio at which the first trained model is modified according to the accepted modification value of second model parameter is reduced. For example, the first trained model is modified according to 80% of the accepted modification value of second model parameter to obtain a modified model, and a decision effect of the modified model is verified; if the decision effect meets the preset condition, the first trained model is modified according to the ratio and the accepted modification value of second model parameter; and if the decision effect does not meet the preset condition, the ratio is further reduced, and modification and verification are performed again until the decision effect of the modified model meets the preset condition, or the accepted modification value of second model parameter is discarded when a minimum ratio is reached.

By verifying, according to the first decision samples, the first trained model modified according to the accepted modification value of second model parameter, i.e., the first pre-trained model, it can be ensured that the finally obtained communication decision model for the first communication site at least produces a good decision effect for the first decision samples.

With reference to FIG. 3, in some implementations, after obtaining the communication decision model for the first communication site (S1032), the method further includes: S1033, adjusting a clustering mode of the second decision samples according to the modification values of second model parameters which are accepted by a plurality of first communication sites.

After determining the accepted modification value of second model parameter, the service node corresponding to the first communication site sends the acceptance condition (such as whether the modification value of second model parameter is accepted, or an acceptance ratio of the modification value of second model parameter) of the modification value of second model parameter to the central node, and the central node adjusts the clustering mode of the second decision samples according to the acceptance conditions of the modification values of second model parameters received from the plurality of service nodes, and sends the clustering mode to the service nodes.

For example, the acceptance conditions of the modification values of second model parameters and corresponding clustering modes are used as input to perform machine learning (such as by a deep neural network, or a decision tree), and the clustering mode of the second decision samples of each service node is adjusted accordingly. A method for the machine learning is not limited herein, and different machine learning methods may be flexibly selected according to specific situations.

Since the sum or average of the modifications of all the second decision samples in each cluster is one modification value of second model parameter and the modification value of second model parameter is related to the clustering mode, the clustering parameters and the like, the acceptance condition of the modification value of second model parameter reflect advantages and disadvantages of the clustering mode and the clustering parameters of the second decision samples. By adjusting the clustering mode and the clustering parameters of the second decision samples according to the modification value of second model parameter, a suitable clustering mode and suitable clustering parameters of the second decision samples may be determined.

With reference to FIG. 3, in some implementations, after obtaining the communication decision model for the first communication site (S103), the method further includes operations S1041 and S1042.

In operation S1041, the initial model is adjusted according to communication decision models of a plurality of first communication sites.

The central node acquires model parameters of the communication decision models of each service node, and may adjust the initial model according to the model parameters and the modification value of second model parameter of each service node.

If the decision effects of most of the service nodes are not good, the central node determines a ratio at which each part of the model structures of the initial model influences a final decision effect (such as influences of connection weights of different parts in a neural network on the decision effect) according to differences between the model parameters of the initial model and the model parameters of the plurality of communication decision models, and whether the model structure with a smaller influence on the final decision effect is removed is determined by manual decision.

The second decision samples and the corresponding modification values of second model parameters are counted, and the model structures of the initial model are increased with the aid of manual decision, that is, part of the model structures of the initial model are made more complex.

For example, all the modification values of second model parameters and the numbers of the second decision samples corresponding thereto are acquired, and the distribution of the second decision samples are counted.

The model structure corresponding to the densely distributed second decision samples may need to be made more complex, so as to enable the model to distinguish between the densely distributed second decision samples more finely to produce a better decision effect. For example, the number of rules or thresholds corresponding to the regions of a decision tree corresponding to the densely distributed second decision samples is increased, or the number of connections of intermediate layer nodes corresponding to the densely distributed second decision samples in a neural network is increased. The complexity of the model structure corresponding to the sparsely distributed second decision samples does not need to be increased.

It should be noted that computational burdens of the service nodes need to be considered when increasing the complexity of the model structure, and the computing power used in a decision process of the initial model with the increased model structures needs to be kept below original load levels or maximum limits of preset computing power of the service nodes.

In operation S 1042, the process is returned to the operation of training the initial model according to the first decision samples.

After the central node completes the adjustment to the model structures and creates a new initial model, the central node issues the new initial model to the service nodes.

All the service nodes use the same initial model. Apparently, an independent initial model may be created for a certain service node for different cases of different service nodes.

By removing the model structure which has the smaller influence on the final decision effect, the parameters of the model are reduced, and a requirement on decision computing power is lowered; and by increasing the complexity of the model structure corresponding to the densely distributed second decision samples, sensitivity of the structure at a particular position in the model structures of the initial model can be increased, so that the densely distributed decision samples can be distinguished from each other more finely, thereby producing a better decision effect.

### First Exemplary Implementation

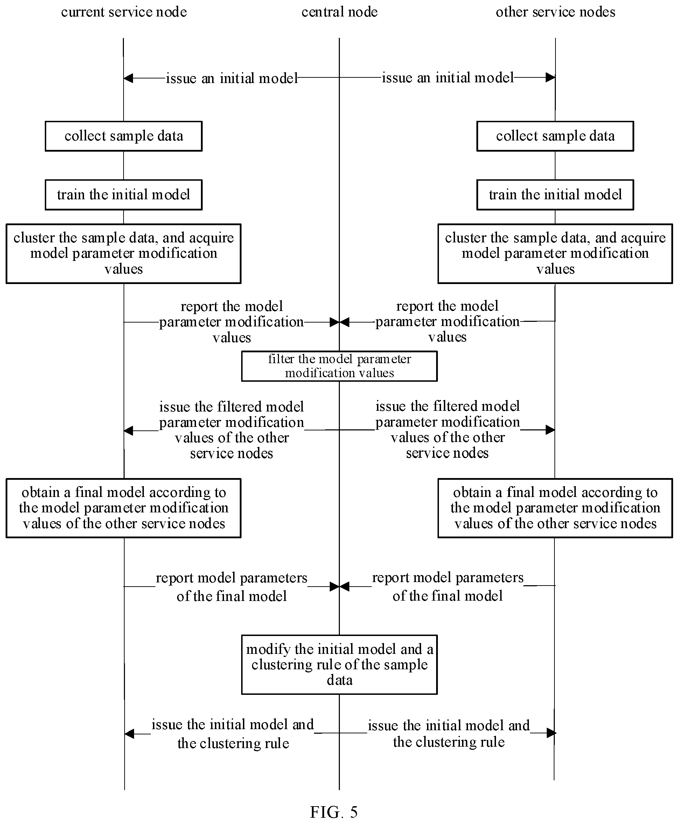

With reference to FIG. 5, the method for training a communication decision model provided in the implementations of the present disclosure may be used to train a communication decision model configured to decide whether to switch a terminal to a neighboring cell, and include the following operations A01 to A05.

In operation A01, sample data is collected.

The sample data of each cell is collected, and the sample data includes decisions already made and decision effects. The decisions already made include a decision of switching to the neighboring cell and a decision of not switching to the neighboring cell; and the decision effects may be obtained by an evaluation function: the decision effects corresponding to samples of the decisions of switching to the neighboring cell may be obtained by inputting whether the terminal is switched back to a local cell later, an time interval from switching back to the local cell to recently switching out of the local cell, and feedback after switching out of the local cell into the evaluation function, and the decision effects corresponding to samples of the decisions of not switching to the neighboring cell may be obtained by inputting whether an abnormal interruption occurs in a communication process, how long the communication process lasts before the abnormal interruption, throughput when the communication process lasts, and corresponding power/scheduling cost into the evaluation function.

In operation A02, an initial model is trained.

A deep neural network model is built in each cell, and all deep neural network models have the same structure, but may have different parameters.

The deep neural network model in each cell performs local learning according to the collected sample data to obtain a trained model corresponding to the cell, and records a model parameter modification value of each piece of sample data relative to the model parameters of the initial model.

In operation A03, the samples are clustered.

By taking a base station as a unit, the sample data of the cells included in the base station and the corresponding model parameter modification values are collected, and the collected sample data is clustered by a k-center algorithm.

After corresponding clusters are obtained, an arithmetic mean of the model parameter modification values corresponding to all the sample data in each cluster is calculated and taken as a model parameter modification value corresponding to the cluster.

In operation A04, a communication decision model is obtained.

Each cell in the base station incorporates the model parameter modification values of the base station into a trained model of the cell according to the model parameter modification values of the base station and the numbers of the sample data of the clusters corresponding to the model parameter modification values, which may include: incorporating all the model parameter modification values corresponding to the base station into the trained model of the cell to obtain an adjusted model, and verifying a decision effect of the adjusted model according to the sample data of the cell. If the decision effect is not good, the cell declines all the model parameter modification values, and restores the model to the original trained model; and if the decision effect is good, the cell incorporates the model parameter modification values into the trained model of the cell according to a proportion of the number of the sample data corresponding to each model parameter modification value.

If most of the cells in the base station adopt the model parameter modification values of the base station, all the model parameter modification values of the base station are sent to a central node. Apparently, all the model parameter modification values of the base station may also be sent to an Element Management System (EMS) or other background nodes.

The central node forwards all the model parameter modification values of the base station to the other base stations for cells in the other base stations to process the model parameter modification values of the base station with a method similar to that used by the cells in the base station.

Similarly, each cell in the base station may also receive the model parameter modification values sent by the other base stations, process the received model parameter modification values with the same method, and accordingly adjust the trained model, so as to obtain the communication decision model corresponding to the cell.

In operation A05, the initial model is adjusted.

The central node collects the model of each cell of each base station, including average and mean square error information of each model parameter, prunes and supplements the deep neural network model with reference to reported cluster sample information, and sends the pruned and supplemented deep neural network model to each cell of each base station.

Meanwhile, the central node adjusts a clustering mode of the sample data according to acceptance conditions (such as whether the model parameter modification values are accepted, and a ratio at which the model parameter modification values are accepted) of the model parameter modification values of all the base stations, and also sends the modified clustering mode to each cell of each base station.

### Second Exemplary Implementation

Unlike the first exemplary implementation, a communication decision model provided in this implementation is used for query prediction, that is, predicting one or more next queries of a user and searching in advance on a basis that a current query or some previous queries of the user are known, so as to return results as soon as possible for the user in the next queries. With reference to FIG. 5, the method provided in this implementation may include the following operations B01 to B05.

In operation B01, sample data is collected.

Query commands of application programs of each user for data sources are collected. In general, formats of the query commands used by the application programs are in normal forms, all query normal forms of the application programs may be summarized through pattern matching, index values corresponding to the queries may be extracted by analyzing range clauses in the query normal forms, and the obtained query normal forms and index values are taken as the sample data.

Each query of the user may be regarded as one sample for learning, and whether a decision result is good is determined by taking a normal form and an index value of the next query of the user as labels of a predicted result.

In operation B02, an initial model is trained.

An initial model of a service node corresponding to each user is two Bayesian belief networks, one for predicting the normal form of the next query and the other for predicting the index value of the query. The two Bayesian belief networks are trained according to the collected sample data to obtain a trained model, and a network parameter modification value of each sample relative to each Bayesian belief network is recorded.

The Bayesian belief network for predicting the normal form of the next query makes a decision according to the normal forms and viewing sequences of several previous queries of the user, and meanwhile may record values of first few fields in a current query result.

After the normal form of the next query is predicted, the Bayesian belief network for predicting the index value of the query predicts the index value according to the predicted normal form, and an input into the Bayesian belief network includes the normal forms of several previous queries together with index values used in the several previous queries and values of first few fields in each of the several previous queries.

In operation B03, samples are clustered.

The sample data corresponding to each user is clustered by the k-center algorithm, and indexes used for clustering the samples may be query types and index information of the several previous queries, or a query type of the next query of the user.

After corresponding clusters are obtained, an arithmetic mean of the model parameter modification values corresponding to all the sample data in each cluster is calculated and taken as a model parameter modification value corresponding to the cluster.

In operation B04, a communication decision model is obtained.

The service node corresponding to each user sends all the model parameter modification values to a central node. Apparently, all the model parameter modification values may also be sent to an EMS or other background nodes.

The central node forwards all the model parameter modification values corresponding to a user to service nodes corresponding to the other users, and the service node corresponding to each of the other users incorporates the model parameter modification values corresponding to the user into a trained model of each of the other users according to the model parameter modification values corresponding to the user and the numbers of the sample data of the clusters corresponding to the model parameter modification values, which may include: incorporating all the model parameter modification values corresponding to the user into the trained model of each of the other users to obtain an adjusted model, and verifying a decision effect of the adjusted model according to the sample data of each of the other users. If the decision effect is not good, all the model parameter modification values are declined, and the model is restored to the original trained model; and if the decision effect is good, the model parameter modification values are incorporated into the trained model of each of the other users according to a proportion of the number of the sample data corresponding to each model parameter modification value.

Similarly, the service node corresponding to the user may also receive the model parameter modification values sent by the service nodes corresponding to the other users, process the received model parameter modification values with the same method, and accordingly adjust the trained model, so as to obtain the communication decision model corresponding to the user.

In operation B05, the initial model is adjusted.

The central node collects the communication decision model corresponding to each user, including average and mean square error information of each model parameter, adjusts input items and intermediate decision nodes with reference to reported cluster sample information, and sends the adjusted models to the service nodes corresponding to all the users.

Meanwhile, the central node adjusts a clustering mode of the sample data according to acceptance conditions (such as whether the model parameter modification values are accepted, and a ratio at which the model parameter modification values are accepted) of all the model parameter modification values corresponding to all the users, and also sends the modified clustering mode to the service node corresponding to each user.

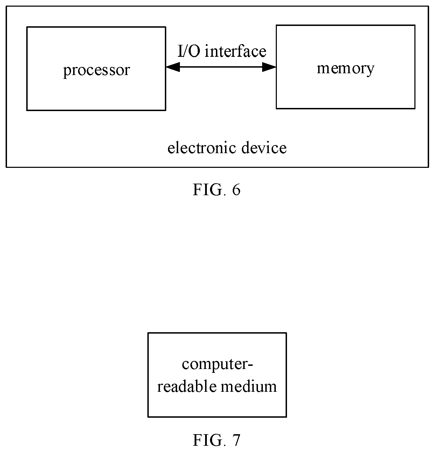

In the second aspect, with reference to FIG. 6, the present disclosure provides an electronic device, including: one or more processors; a memory having stored thereon one or more programs, which, when executed by the one or more processors, cause the one or more processors to carry out the method for training a communication decision model descried in any above implementation; and one or more I/O interfaces connected between the processor(s) and the memory and configured to enable information interaction between the processor(s) and the memory.

The processor is a device having data processing capability, and includes, but is not limited to, a Central Processing Unit (CPU); the memory is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) is connected between the processor and the memory, is configured to enable the information interaction between the memory and the processor, and includes, but is not limited to, a data bus (Bus).

In the third aspect, with reference to FIG. 7, the present disclosure provides a computer-readable medium having a computer program stored thereon. When the program is executed by a processor, the method for training a communication decision model described in any above implementation is carried out.

The processor is a device having data processing capability, and includes, but is not limited to, a CPU; and the memory is a device having data storage capability, and includes, but is not limited to, an RAM (more specifically, an SDRAM, a DDR SDRAM, etc.), an ROM, an EEPROM, and a flash memory; and the Input/Output (I/O) interface (read/write interface) is connected between the processor and the memory, is configured to enable the information interaction between the memory and the processor, and includes, but is not limited to, a data bus (Bus).

It should be understood by those of ordinary skill in the art that the functional modules/units in all or some of the operations, the systems and the devices disclosed above may be implemented as software, firmware, hardware, or suitable combinations thereof.

If implemented as hardware, the division between the functional modules/units stated above is not necessarily corresponding to the division of physical components; for example, one physical component may have a plurality of functions, or one function or operation may be performed through cooperation of several physical components.

Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM (more specifically, an SDRAM, a DDR SDRAM, etc.), an ROM, an EEPROM, and a flash memory or other magnetic storage device; a Compact Disc Read Only Memory (CD-ROM), a Digital Versatile Disc (DVD) or other optical discs; a magnetic cassette, a magnetic tape, a magnetic disk or other magnetic storage devices; and any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary implementations using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation can be used alone or in combination with features, characteristics and/or elements described in connection with other implementations. Therefore, it should be understood by those of ordinary skill in the art that various changes in the forms and the details can be made without departing from the scope of the present disclosure of the appended claims.

## Claims

1. A method for training a communication decision model used by a communication site to make decisions, comprising:
training an initial model according to first decision samples to adjust model parameters of the initial model, so as to obtain a first trained model; wherein the first decision samples are samples of decisions already made by a first communication site;
acquiring at least one modification value of second model parameter of at least one second trained model; wherein each of the at least one second trained model is obtained by training the initial model according to second decision samples of a respective one second communication site, and the second decision samples are samples of decisions already made by the respective one second communication site; and each modification value of second model parameter represents at least part of modifications to model parameters of the second trained model relative to the model parameters of the initial model; and
adjusting model parameters of the first trained model according to at least part of modification values of second model parameters to obtain a communication decision model for the first communication site.

2. The method of claim 1, wherein a modification value of second model parameter of each second trained model is obtained by:
clustering the second decision samples of the second trained model; and
determining a sum of modifications of all the second decision samples in each cluster as one modification value of second model parameter, with a modification of each second decision sample being a modification made to the model parameters of the initial model when the initial model is trained according to the second decision sample.

3. The method of claim 2, wherein adjusting the model parameters of the first trained model according to the at least part of the modification values of second model parameters to obtain the communication decision model for the first communication site comprises:
calculating, according to the first decision samples, a decision effect of the first trained model produced after adjusting the first trained model according to each modification value of second model parameter, so as to determine an accepted modification value of second model parameter; and
adjusting the model parameters of the first trained model according to the accepted modification value of second model parameter, so as to obtain the communication decision model for the first communication site.

4. The method of claim 3, wherein adjusting the model parameters of the first trained model according to the accepted modification value of second model parameter, so as to obtain the communication decision model for the first communication site comprises:
in response to a plurality of accepted modification values of second model parameters existing, adjusting the model parameters of the first trained model according to each accepted modification value of second model parameter and a weight corresponding to each accepted modification value of second model parameter, with the weight corresponding to each accepted modification value of second model parameter being calculated according to a number of the second decision samples corresponding to the modification value of second model parameter.

5. The method of claim 3, wherein adjusting the model parameters of the first trained model according to the accepted modification value of second model parameter, so as to obtain the communication decision model for the first communication site comprises:
adjusting the first trained model according to the accepted modification value of second model parameter to obtain a first pre-trained model;
calculating a decision effect of the first pre-trained model according to the first decision samples; and
in response to the decision effect not meeting a preset condition, determining that the first trained model is the communication decision model for the first communication site.

6. The method of claim 3, after obtaining the communication decision model for the first communication site, further comprising:
adjusting a clustering mode of the second decision samples according to the modification values of second model parameters which are accepted by a plurality of first communication sites.

7. The method of claim 1, wherein acquiring the at least one modification value of second model parameter of the at least one second trained model comprises:
filtering the modification values of second model parameters of all second trained models according to a preset filtering rule, and acquiring the modification values of second model parameters of the second trained models passing through the filtering.

8. The method of claim 1, after obtaining the communication decision model for the first communication site, further comprising:
adjusting the initial model according to communication decision models of a plurality of first communication sites; and
returning to the operation of training the initial model according to the first decision samples.

9. An electronic device, comprising:
one or more processors;
a memory having stored thereon one or more programs, which, when executed by the one or more processors, cause the one or more processors to carry out the method for training a communication decision model of any one of claims 1 to 8; and
one or more I/O interfaces connected between the one or more processors and the memory and configured to enable information interaction between the one or more processors and the memory.

10. A computer-readable medium having a computer program stored thereon which, when executed by a processor, causes the processor to carry out the method for training a communication decision model of any one of claims 1 to 8.
